# EUROPEAN PATENT SPECIFICATION

(11) **EP 0 957 016 B1**
(45) Date of publication and mention of the grant of the patent: **22.03.2006**
(21) Application number: 98901022.8
(22) Date of filing: 28.01.1998
(51) Int. Cl.: B60R 25/04

(54) **KEY CONTROLLER FOR VEHICLES**
SCHLÜSSELKONTROLLGERÄT FÜR FAHRZEUGE
CONTROLEUR DE CLES POUR VEHICULES

(30) Priority: 29.01.1997 JP 1563997
(43) Date of publication of application: 17.11.1999
(73) Proprietor: Toyota Jidosha Kabushiki Kaisha, Toyota-shi, Aichi-ken 471-71 (JP)
(72) Inventor: KAMIYA, Masachika, Toyota Jidosha Kabushiki Kaisha, Toyota-shi, Aichi-ken 471 (JP)
(74) Representative: Kügele, Bernhard
(86) International application number: PCT/JP1998/000343
(87) International publication number: WO 1998/032637

(56) References cited:
- DE-A- 4 317 114
- DE-A- 19 537 901
- JP-A- 8 072 673
- JP-A- 8 180 264
- JP-A- 8 268 229

## Description

### FIELD OF THE INVENTION

The present invention relates to a key control apparatus for a vehicle, and particularly to a key control apparatus for a vehicle for controlling devices mounted on a vehicle using a vehicle key such as an ignition key for a vehicle.

### BACKGROUND ART

An engine of a vehicle such as an automobile can be started by a vehicle key, which is an ignition key. A plurality of vehicle keys belongs to one vehicle and includes a main key having every function such as starting of the engine and the like, and also includes a sub-key having a restricted function with which, for example, opening of a private box such as a trunk box or a glove box is not allowed. With the main key and sub-key, which are vehicle keys, having different structures, restrictions of a function in opening a private box or the like are mechanically determined.

Incidentally, electronic control in an interior of a vehicle has recently advanced and there is an electronic control apparatus for electronically controlling devices in the interior of a vehicle. Such electronic control apparatuses include, for example, an opening/closing device which controls opening and closing of a private box, and a seat control apparatus which can move a seat to a position that a vehicle occupant desires. The seat control apparatus allows movement of the seat to the position that the vehicle occupant desires by transmitting an inherent code from a vehicle key and by reading from a memory a setting value which is as the position that the vehicle occupant desires and which is stored to correspond to the inherent code.

However, since there is a plurality of vehicle keys, the contents of the memory are altered each time a setting value is set by each vehicle key, and when a setting value is altered by a different vehicle key, the setting value stored in the memory must be altered again.

In order to solve this kind of a problem, a control gain changing device of a control apparatus for an automobile has been proposed in which when a signal is received from a transmitter exclusively used by an owner-driver, namely, only when the owner-driver drives, is a control gain changed, and when a driver other than the owner-driver drives, a base control gain is used to allow control without changing the control gain (see Japanese Patent Application Laid-Open (JP-A) No. 6-206476).

However, even when it is desired to have any one of the plurality of vehicle keys selectively control a portion of device control, for example, even when it is desired to prohibit the sub-key from opening and closing the trunk box or the glove box, in a conventional control gain changing apparatus, the setting values can be changed only by a transmitter exclusively used by an owner-driver and different setting values cannot be set.

Further, when there is a plurality of main keys including an owner key owned by the owner-driver, there is a possibility that setting values may be changed with respect to each main key. In this case, in the conventional control gain changing apparatus, the setting values can be changed only by the transmitter exclusively used by the owner-driver and setting of a plurality of different setting values is not possible.

In view of the above-described circumstances, it is an object of the present invention to obtain a key control apparatus for a vehicle which can control devices mounted on a vehicle correspondingly to a classification of a vehicle key.

Reference may be made to DE-A-19537901 (which discloses the pre-characterizing features of the present invention), and to DE-A-4317114.

### DISCLOSURE OF THE INVENTION

In order to achieve the above-described object, the invention described in claim 1 comprises: a key control apparatus for a vehicle, comprising:
input means for inputting from key means an inherent code which is stored in advance in the key means, wherein said inherent code includes a classification of a key which indicates whether the key is a main key or whether the key is a sub-key for a vehicle;
storage means which stores a plurality of said inherent codes correspondingly to said classification of key, said inherent codes of the main key and the sub-key being stored in advance in said storage means;
determination means for determining said classification of the key which indicates whether the key is a main key or a whether the key is a sub-key, by collating the inherent code inputted into said input means, with the plurality of said inherent codes stored in said storage means;
characterized by:
a plurality of device control means for respectively controlling a plurality of devices which are mounted on a vehicle and which can each function independently; and
limiting means for limiting the control of at least one of said plurality of device control means based on the result of a determination of made by said determination means as to whether a key is a main key or whether a key is a sub-key;
wherein when a vehicle key is determined as the sub-key by said determination means, said limiting means limits the control of at least one of said plurality of device control means.

The invention described in claim 3 is characterized by, in the key control apparatus for a vehicle described in claim 1, further comprising setting value storing means (62) which stores a setting value for at least one of said plurality of device control means for controlling a respective device according to the setting value when the setting value is read out from the setting value storing means, and wherein said plurality of device control means includes setting value control means which effects reading and writing of the setting value for said setting value storing means.

The invention described in claim 4 is characterized such that, in the key control apparatus for a vehicle described in claim 3, said limiting means prohibits alteration of setting values with respect to said setting value storing means.

The invention described in claim 5 is characterized such that, in the key control apparatus for a vehicle described in any one of claims I to 4, said device control means includes vehicle interior control means mounted within an accommodation space of the vehicle.

In the invention of claim 1, the inherent code recorded in advance in the key means is inputted by the input means. This inherent code includes the classification of the key which indicates either a main key or a sub-key for a vehicle, and can be inputted by transmitting the inherent code from the key means and by receiving the transmitted inherent code. The main key has all functions of a vehicle key and the sub-key has a limited function so as to prohibit opening of a private box such as a trunk box or a glove box. The plurality of inherent codes are stored in the storage means correspondingly to the classifications of the keys, and based on the inherent codes stored in the storage means and the inherent code inputted into the input means, a classification of a key is determined by the determination means. The limiting means limits, based on the result of a determination made by the determination means, at least one control of the plurality of device control means. The device control means control the devices mounted on the vehicle, such as a private box, a scat, and the like, like a switching device of the private box, a seat control device, and the like. The devices can independently and singly function, i.e., operate. For example, the opening and closing of the private box and the movement of the seat can each function independently without being associated with each other. Accordingly, the device control means can each function independently and singly. Further, a plurality of device control means may be used to operate one device. The device control means may have been previously set with a limited function with respect to each main key and sub-key. As a result, the limiting means can limit the control of at least one of the plurality of device control means correspondingly to the classification of the key indicated by the key means.

As also described in claim 1, when the vehicle key is determined as the sub-key by the determination means, the limiting means can limit the control of at least one of the plurality of device control means. Namely, when the vehicle key is determined as the sub-key, by placing a functional limitation so as to prohibit opening of the private box such as the trunk box or the glove box, it is possible to limit control of the device control means with respect to the sub-key, which is not the main key.

Here, the device control means such as a seat control device can set in the most suitable manner a setting value for each vehicle occupant by storing the setting values in a memory or the like and reading the same. Accordingly, as described in claim 3, setting value storing means is further provided which stores the setting value for controlling a device of at least one of the plurality of device control means. The plurality of device control means are made to include the setting value control means which effects reading and writing of the setting values for the setting value storing means and which controls devices by the read setting values, and therefore, reading and writing of the setting value for each vehicle occupant can be carried out with respect to the memory or the like.

In this case, as described in claim 4, if the limiting means limits by prohibiting alteration of a setting value for the setting value storing means, an alteration of the setting value for each vehicle occupant is not made in the memory or the like.

Further, as also described in claim 5, the device control means can include the vehicle interior control means mounted within the accommodation space of the vehicle. Within the accommodation space of the vehicle, the vehicle interior control means, which is various kinds of operable devices, is mounted. By limiting control of the vehicle interior control means in accordance with the classification of the key, there is no possibility of a setting of the vehicle interior control means being inadvertently altered.

As explained above, according to the invention described in claim_ 1, based on the plurality of inherent codes stored correspondingly to the classification of the key and the inputted inherent code, the classification of the key is determined by the determination means. Based on the result of this determination, the limiting means can limit the control of at least one of the plurality of device control means. Accordingly, there is an effect in that control of the plurality of device control means can be carried out most suitably correspondingly to the classification of the key.

According to the invention described in claim 2, when a vehicle key is determined as the sub-key, the limiting means can limit the control of at least one of the plurality of device control means, and therefore, there is an effect in that a functional limitation in which, for example, opening of the private box is prohibited, is allowed to correspond to the classification of the key.

According to the invention described in claim 3, the setting value for controlling device of the device control means can be stored in the setting value storing means, and the device control means can be made to include the setting value control means which effects reading and writing of the setting value for the setting value storing means and which controls device by the read setting values. Accordingly, there is an effect in that reading and writing of the setting value for each vehicle occupant can be carried out with respect to the memory or the like.

According to the invention described in claim 4, the limiting means provides limitation by prohibiting alteration of setting value for the setting value storing means, and therefore, no alteration of the setting value for each vehicle occupant is made in the memory or the like. Accordingly, there is an effect wherein the most suitable setting values can be maintained.

According to the invention described in claim 5, the device control means includes the vehicle interior control means mounted within the accommodation space of the vehicle, and therefore, there is an effect in that control of the vehicle interior control means can be limited in accordance with the classification of the key, and there is no possibility of the setting of the vehicle interior control means being inadvertently altered.

### BRIEF DESCRIPTION OF THE DRAWINGS

Fig. 1 is a block diagram which schematically shows an LAN device for a vehicle according to an embodiment of the present invention.
Fig. 2 is an image diagram which shows the contents stored in a memory of an EFi.
Fig. 3 is an image diagram which shows contents stored in a memory of a body ECU.
Fig. 4 is an image diagram which shows allocation of permission and prohibition of operations and permission and prohibition of changing setting values, with respect to each vehicle key.
Fig. 5 is a flow chart which shows a flow of processing for an operation of a memory function of each vehicle key.
Fig. 6 is a diagram which shows an example of a schematic structure of an operation display panel connected to a navigation ECU.
Fig. 7 is a flow chart which shows a flow of processing to be executed by the navigation ECU.

### BEST MODES FOR CARRYING OUT THE INVENTION

Referring now to the drawings, an example of an embodiment of the present invention will be hereinafter described in detail. In the present embodiment, the present invention is applied to an LAN system for a vehicle, in which a plurality of control devices are connected together within a vehicle.

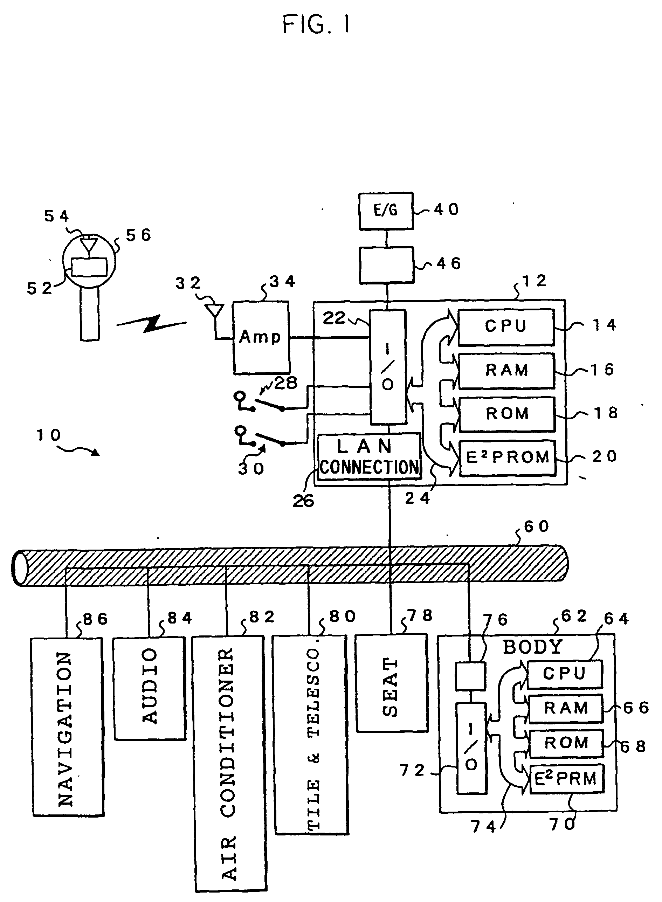

As shown in Fig. 1, an LAN system 10 for the vehicle according to the present embodiment includes an electronically, controlled fuel injector (hereinafter referred to as EFi) 12 served as an immobilizer electronic control device, in which when a regular ignition key is not used, starting of an engine or the like is prohibited. The EFi 12 is an ECU which outputs a signal for driving an engine 40.

Sequential to the ignition key being loaded into a key cylinder, the EFi 12 has a function of prohibiting the starting of the engine (preventing theft of the vehicle) when a normal ignition key is not used. The EFi 12 includes a microcomputer comprised of a CPU 14, a RAM 16, a ROM 18, and an input/output port (I/O) 22, which are connected via a bus 24 so as to allow transmitting and receiving of commands or data. Further, the EFi 12 also provides a memory 20 in which inherent codes of vehicle keys are stored (the details will be described later), and the memory 20 is connected to the bus 24. The memory 20 may be E² PROM or a flash memory. Further, the ROM 18 stores a processing routine (described later) to be executed in the EFi 12.

The input/output port 22 of the EFi 12 is connected to an amplifying circuit (Amp) 34 and transmitting and receiving of a signal such as an inherent code (CODE) between the EFi 12 and the amplifying circuit 34 is carried out.

In order to transmit and receive an electric wave signal to and from an ignition key 56, the amplifying circuit 34 amplifies a signal from the EFi 12 or a signal from the ignition key 56.

Further, connected to the amplifying circuit 34 is an antenna 32 which sends and receives a signal with respect to the ignition key 56. The antenna 32 is mounted on a key cylinder (not shown) in which the ignition key 56 is inserted. As is generally known, after the ignition key 56 is inserted into the key cylinder (not shown), the key cylinder is rotatable. The key cylinder contains various types of switches, for example, an accessory switch for turning on and off a power source of accessory equipment, an ignition switch 30 for turning on and off a power source for an ignition plug or the like, and a starter switch for turning on and off a power source of a starter motor.

One end of the ignition switch (IGSW) 30 is connected to the input/output port 22 of the EFi 12 and another end thereof is connected to a battery power source. When the ignition switch 30 is turned on, a high level signal is inputted to the input/output port 22. Further, in the present embodiment, a key switch (KSW) 28 which detects the insertion of the ignition key 56 is mounted on the key cylinder (not shown). One end of the key switch 28 is connected to the input/output port 22 and another end thereof is connected to the battery power source. When the key switch 28 is turned on, a high level signal is inputted to the input/output port 22.

Connected to the engine 40 mounted on the vehicle is a driving device 46 which ignites the engine 40 and supplies fuel to the engine 40. The engine 40 is connected via the driving device 46 to the input/output port 22 of the EFi 12.

The ignition key 56 of the present embodiment includes a transponder 52 having an inherent code recorded thereon, the inherent code indicating that the ignition key 56 is a normal vehicle key of the vehicle (not shown). The transponder 52 is structured to include a power source circuit, an inherent code recording portion, a reading portion, and a transmitting portion (not shown). Further, connected to the transponder 52 is a key antenna 54. When the transponder 52 receives a predetermined electric wave from outside, this electric wave is received by the key antenna 54 and is supplied to the power source circuit. The power source circuit obtains electric power from the received electric wave and supplies the power to an internal circuit. Then, the inherent code recorded in the inherent code recording portion is read and the read code is transmitted from the key antenna 54 via a transmitting circuit.

The LAN system 10 for a vehicle according to the present embodiment provides a bus 60 for LAN, which is connected to the input/output port 22 of the EFi 12 via an LAN connection unit 26.

A body ECU 62 is connected to the bus 60 for LAN. The body ECU 62 includes a microcomputer comprised of a CPU 64, a RAM 66, a ROM 68, and an input/output (I/O) port 72, which are connected via a bus 74 so as to allow transmitting and receiving, of commands or data. Connected to the bus 74 is a memory 70 for storing parameters (characteristic values) used for condition settings (characteristic settings) of electronic devices mounted on the vehicle, which are to be controlled by ECUs, respectively (described later). Further, connected to the input/output port 72 is an LAN connection unit used for connection to the bus 60 for LAN.

The memory 70 may be E² PROM or a flash memory. The memory 70 may also store codes which represent the kind of vehicle which it is on and an ECU which it is in, and code which represents connected electronic device. Further, the memory 70 may store, as data, parameters for setting the characteristics of the electronic devices to be respectively controlled by the ECUs (details will be described later).

Connected to the bus 60 for LAN are a seat ECU 78, a tilt and telescopically adjustable steering ECU 80, an air conditioner ECU 82, an audio ECU 84, and a navigation ECU 86, which are each formed by a microcomputer in the same way as described above.

In the foregoing, each ECU is provided in the interior of the vehicle and is connected to the bus 60 for LAN. As the bus 60 for LAN, one can be used which is set based on an ISO9141 standard or the like. In this way, a LAN for a vehicle is constructed by connecting each ECU to the bus 60 for LAN.

The memory 20 of the EFi 12 and the memory 70 of the body ECU 62 described above are each ROM which allows electrical writing and deletion, in which a normal code such as an inherent code of a vehicle key or a setting value of a device connected to the ECU is stored or updated.

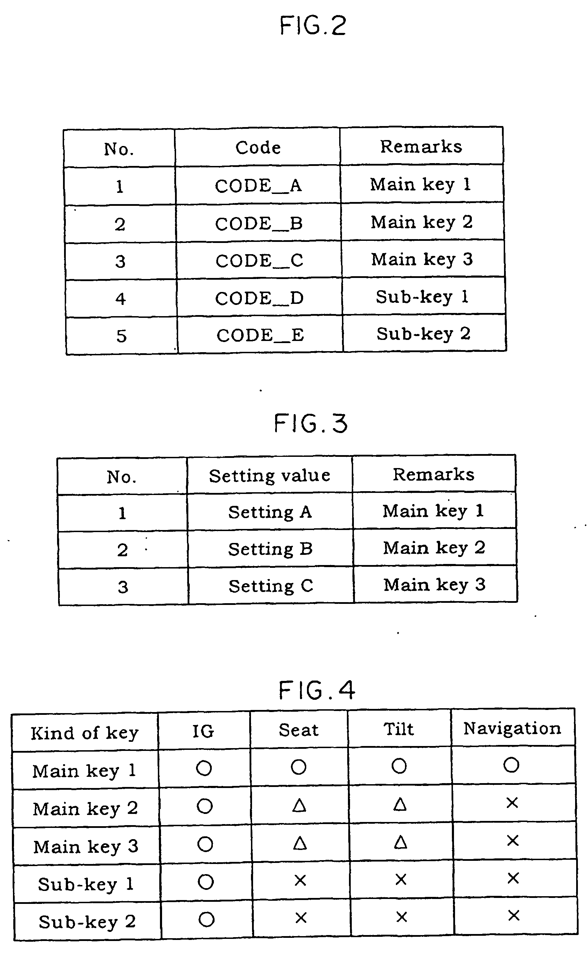

As shown in Fig. 2, the capacity of the memory 20 of the EFi 12 is secured so that five inherent codes can be stored therein. A no. 1 inherent code CODE_A is for storing an inherent code recorded on the ignition key 56, which serves as a first main key, and is recorded in advance at manufacturing. The inherent code CODE_A may be recorded by initial registration processing (a description thereof is omitted).

Next, a no. 2 inherent code CODE_B is for storing an inherent code recorded on a vehicle key which serves as a second main key, and a no. 3 inherent code CODE_C is for storing an inherent code recorded on a vehicle key which serves as a third main key. Further, a no. 4 inherent code CODE_D is prepared for storing a spare code so as to allow previous recording of an inherent code of a sub-key during manufacturing or the like or so as to allow a user to additionally register the inherent code of the sub-key. Similarly, a no. 5 inherent code CODE_E is prepared for storing a spare code so as to allow previous recording of an inherent code of a sub-key during manufacturing or the like or so as to allow a user to additionally register the inherent code of the sub-key.

Further, in the present embodiment, the five inherent codes respectively prepared for the vehicle keys can be stored in the memory 20. However, four or less codes or six or more codes may be stored.

As shown in Fig. 3, a capacity of the memory 70 of the body ECU 62 is secured so that three settings (settings corresponding to vehicle keys having setting values of each of a plurality of devices) can be stored correspondingly to a number in the memory 20 of the EFi 12, i.e., a main key stored in the memory 20.

A no. 1 setting A is for storing setting values of devices corresponding to the inherent code of the ignition key 56, which serves as the first main key. Further, a no. 2 setting B is for storing setting values of devices corresponding to the inherent code of the vehicle key, which serves as the second main key, and a no. 3 setting C is for storing setting values of devices corresponding to the inherent code of the third main key.

These setting values are parameters for setting the conditions of the electronic devices to be controlled by the ECUs (in the present embodiment, the EFi 12, the body ECU 62, the seat ECU 78, the tilt and telescopically adjustable steering ECU 80, the air conditioner ECU 82, the audio ECU 84, and the navigation ECU 86), for example, a seat position, an inclination angle (tilt) or expansion/contraction length of a steering (telesco.), a setting temperature/ humidity of an air conditioner, a sound volume of an audio, and a navigation destination or a position of a user's own house or the like. Alteration (rewriting) of these setting values can be selectively set for each vehicle key, which will be described later in detail.

Meanwhile, other parameters for setting the conditions of the electronic devices include an illumination value of light controlling and the like operated by an illumination sensor. In addition, there are: a sound volume played back from a speaker device to prevent theft of a vehicle, a sound volume played back from the speaker device at the time of wireless door locking, a value used for setting the hardness of a suspension device, a timing with which a wiper device is operated with an intermittent operation or the like (for example, a medium value of INT), a period in time during which the wiper is operated, a meter luminance value used for setting the lightness of a display device such as a meter, a unit of a running distance to be displayed on the display device (km/mile), a timing of a head-lamp device (length or brightness), a setting temperature of an air conditioning device or a setting value of hot/cold characteristics, a value of a vehicle speed of the vehicle, at which a door lock device automatically locks a door, a shift pattern of an automatic transmission, and the like.

As shown as an example in Fig. 4, permission or prohibition of each operation and permission or prohibition of alteration of each setting value are in advance given to each vehicle key. Fig. 4 shows permission or prohibition of the starting of the engine to be controlled by the EFi 12, permission or prohibition of alteration of a setting value of a seat position to be controlled by the seat ECU 78, permission or prohibition of alteration of a setting value of an inclination angle (tilt) of a steering to be controlled by the tilt and telescopically adjustable steering ECU 80, and permission or prohibition of alteration of a setting value of a destination to be controlled by the navigation ECU 86. In the figure, "○" indicates permission of the starting of the engine and permission of alteration of a setting value, "Δ" indicates partial permission of alteration of a setting value, and "× " indicates prohibition of alteration of a setting value. Namely, the starting of the engine is permitted with respect to all vehicle keys and alteration of the setting value of a destination is permitted only with respect to the first main key. Further, in the second main key and in the second main key, alteration of a setting value of a seat position and alteration of a setting value of an inclination angle (tilt) of a steering are each partially permitted. The reason is that the first main key to be owned by a car owner is allowed to have all functions and the other main keys are each allowed to have selectively previously set functions. Meanwhile, all main keys may be each allowed to have all functions.

Next, an operation of the present embodiment will be described.

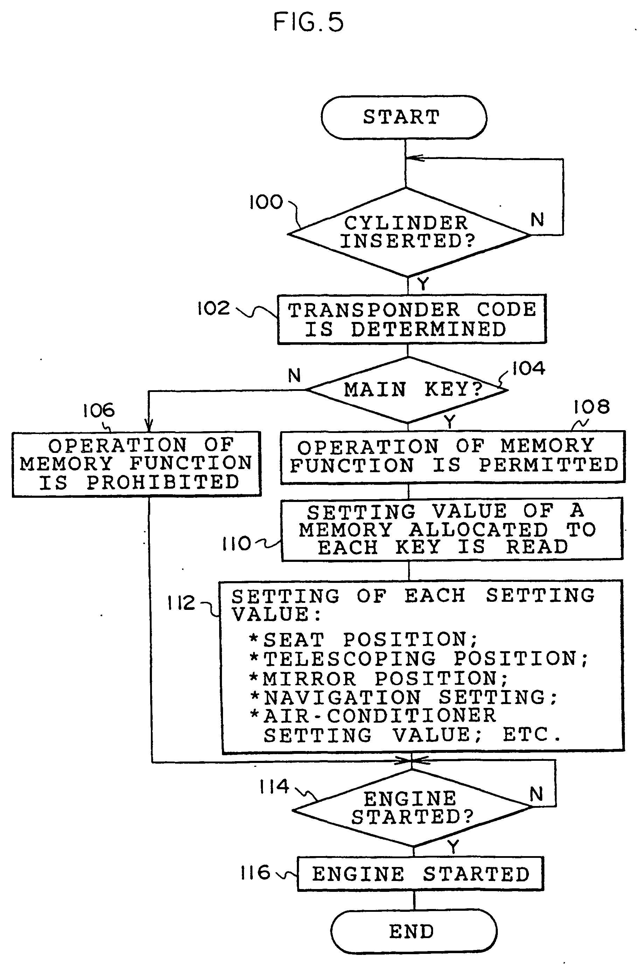

In the EFi 12, a processing routine shown in Fig. 5 is executed. In step 100, it is determined whether the ignition key 56 has been inserted based on a determination regarding whether the key switch (KSW) 28 has been turned on based on inputting of a high-level signal. When the ignition key 56 has not been inserted, the process returns to step 100, and when the ignition key 56 has been inserted, the process proceeds to step 102. In step 102, a transponder code is determined. Namely, the inherent code of the ignition key 56 is read and it is specified whether the read inherent code is for a main key or a sub-key. In this step 102, first, the inherent code recorded on the transponder 52 and transmitted from the ignition key 56 via the key antenna 54 is inputted via the antenna 32 and the amplifying circuit 34. Subsequently, when the inputted inherent code is collated with the plurality of inherent codes stored in the memory 20 and, when there is a corresponding inherent code, the number of the inherent code is read and it is determined whether the inherent code is for a main key or a sub-key. In the present embodiment, vehicle keys numbered at 3 or less are for main keys. Accordingly, a vehicle key numbered at 3 or less is determined as a main key and other keys are each determined as a sub-key. When the inherent code does not correspond to any inherent code, it is not a normal inherent code, and therefore, the processing routine compulsorily ends without carrying out a succeeding operation.

In step 104 which follows, it is determined from the result of the determination made in step 102 whether the ignition key 56 inserted in the cylinder is a main key. When the ignition key 56 inserted in the cylinder is a main key, an affirmative decision is made in step 104 and the process proceeds to step 108. When the ignition key 56 is a sub-key, a negative decision is made in step 104 and the process proceeds to step 106.

In step 106, the ignition key 56 inserted in the cylinder is a sub-key, and therefore, operation of a memory function is prohibited and the process proceeds to step 114. As described above, permission or prohibition of alteration of setting values is in advance given to each vehicle key. Accordingly, operation of the memory function means reading or alteration of the setting values. In step 106, reading or alteration of the setting values is prohibited.

In step 108, the ignition key 56 inserted in the cylinder is a main key, and therefore, operation of the memory function is permitted and the process proceeds to step 110. In step 110, the setting of the memory allocated to each vehicle key is read. Namely, the setting stored in the No. of memory 70 corresponding to the No. of memory 20 at a position corresponding to the inherent code of the ignition key 56 is read (see Figs. 2 and 3). As a result, the setting which is as a memory content corresponding to the ignition key 56 can be read.

In step 112, the setting values read in the foregoing is set for each ECU, and the process proceeds to step 114. In this step 112, a position of a mirror such as a door mirror is set by the body ECU 62, a seat position is set by the seat ECU 78, an inclination angle (tilt) or an expansion/contraction length of a steering (telesco.) is set by the tilt and telescopically adjustable steering ECU 80, a setting temperature/humidity of an air conditioner is set by the air-conditioner ECU 82, a sound volume of an audio is set by the audio ECU 84, and a destination or a position of a user's personal house is set by the navigation ECU 86.

In step 114, it is determined whether an instruction for the starting of the engine has been given. Namely, it is determined whether an IGSW on-signal of a high level corresponding to switching-on of the ignition switch 30 by the ignition key 56 has been inputted. When the instruction for starting the engine has been given, a positive decision is made in step 114. In the subsequent step 116, supply of electric power from the battery power source to the starter motor is started to operate the starter motor, and the engine 40 is thereby started.

In this way, in the present embodiment, the kind of vehicle key inserted in the cylinder is determined, and only when the vehicle key is a main key, is the operation of the memory function permitted. For this reason, each device is set in the most suitable state for the vehicle occupant who owns the ignition key 56 serving as a main key. On the other hand, when the vehicle key is a sub-key, not a main key, the settings of each device are not altered.

Meanwhile, a conventional mechanical key, in which a main key and a sub-key of a vehicle key have different structures, may be combined with the vehicle key of the present embodiment, to determine mechanically and electronically limitations of functions.

In the foregoing, an embodiment of the present invention was described, but as embodiments of the present invention, there are embodiments of various technical matters, described below, in addition to the matters described in a range of claims. Storage means described in claim 1 stores, together with the inherent codes, memory values corresponding to each of a plurality of key means having different inherent codes, and further provides setting value storing means which is for storing setting values corresponding to the memory values and which is used to control electronic devices. As a result, it is possible to have the setting values for controlling the electronic devices correspond to each inherent code.

In this way, a setting value for controlling the electronic devices can be made to correspond to each inherent code of the main keys or the sub-key. However, in some electronic devices, a predetermined series of operations are set as a function. For example, operation of the navigator ECU 86 may include functions for route searching, image quality adjustment, and the like, and a function which allows menu- display of these functions. In this case, it is possible to limit functions or use all functions with respect to each main key and sub-key.

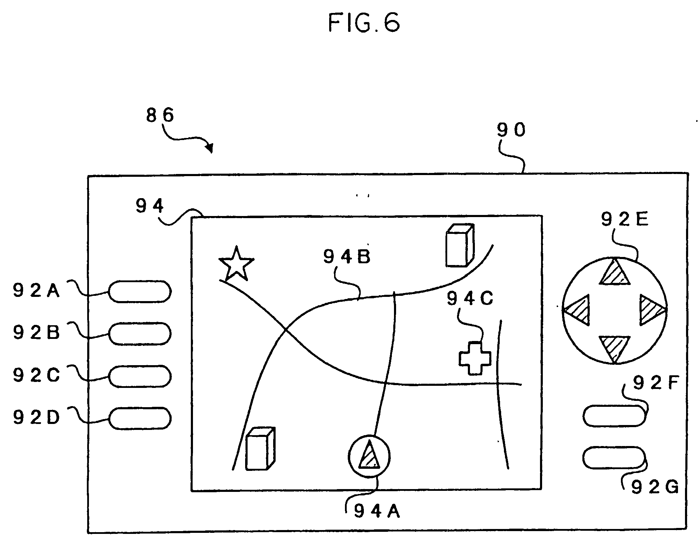

Fig. 6 shows an operation display panel 90 connected to the navigation ECU 86. The operation display panel 90 provides a display 94 for indicating a map or routes for navigation, operation switches, and the like. As the operation switches, there are: a menu button 92A, a present location button 92B, a route searching button 92C, an image quality adjustment button 92D, a cross-hair cursor key 92E, a map magnifying switch 92F, and a map reducing switch 92G.

The menu button 92A is a function-indicating button which allows functions, described later, or other functions to be displayed as a menu on the display 94 by a press-down operation. The other functions may be a destination input and the like. The present location button 92B is a function-indicating button which allows the point where the vehicle is running at present and a map in the periphery of the point to be displayed on the display 94 by a press-down operation. The route searching button 92C is a function-indicating button which allows search, of the most suitable route from the present point or an inputted point to the final destination and allows the most suitable route and a map in the periphery thereof to be displayed on the display 94 by a press-down operation. The image quality adjustment button 92D is a function-indicating button which allows display, of instructions for adjusting lightness, contrast, and color of the display 94 and which allows instructions of adjustment by a press-down operation. The cross-hair cursor key 92E is formed with switches which allows four types of indications, and is a function-indicating button for moving, for example, a point displayed on the display 94 (in Fig. 6, a designation mark 94C) in upward, downward, left-handed, or right-handed directions by a press-down operation of upward, downward, left-handed, or right-handed (on the paper of Fig. 6). The map magnifying switch 92F is a function-indicating button which allows magnification of a map displayed on the display 94 by a press-down operation. The map reducing switch 92G is a function-indicating button which allows reduction of a map displayed on the display 94 by a press-down operation.

Fig. 6 shows an example in which as a display of the display 94, a mark 94A which indicates a position of the owner's vehicle, a road 94B on the map, and a designation mark 94C are displayed.

Next, a description will be given of an operation to be executed by the navigation ECU 86, which limits functions or allows use of all functions for each main key and sub-key.

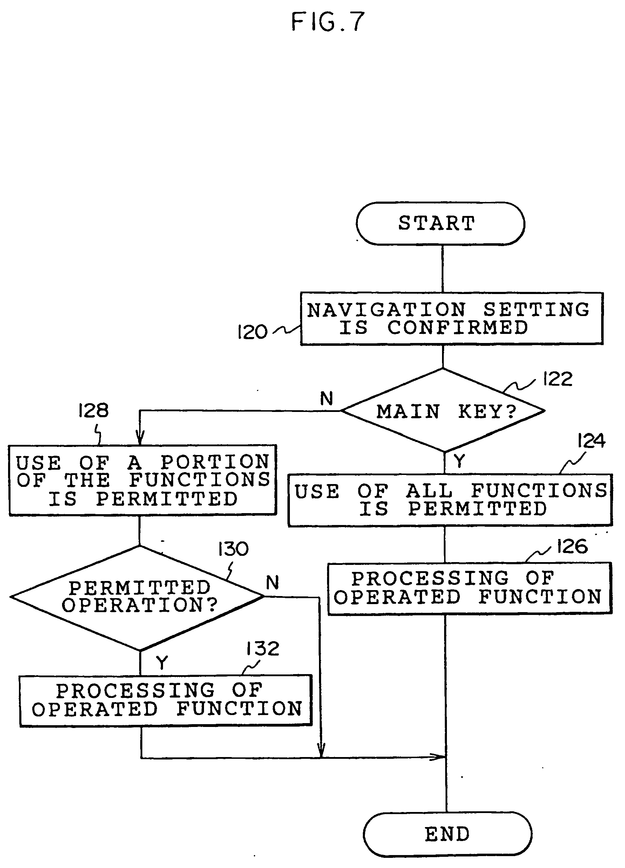

As shown in Fig. 7, in the navigation ECU 86, when a button or a switch on the operation display panel 90 is pressed down, an interruption routine shown in Fig. 7 is executed. In step 120, a setting value (set in step 112 of Fig. 5) is confirmed., Although shown as an example in Fig. 4, an identifier which represents a corresponding key may be read for each key.

Next, in step 122, it is determined whether the ignition key 56 is a main key. When the ignition key 56 is a main key, it is affirmed in step 122, and in step 124, using with respect to all functions is permitted (i.e., indication of functions is made effective). Namely, each function indication based on press-down of each of the menu button 92A, the present location button 92B, the route searching button 92C, the image quality adjustment button 92D, the cross-hair cursor key 92E, and the map magnifying switch 92F, and the map reducing switch 92G is made effective.

Next, in step 126, the operated function is processed and the present routine ends. Namely, processing is executed based on the function indication caused by the pressed-down switch or button.

When the ignition key 56 is not a main key, it is negated in step 122, and in step 128, using of only a portion of the functions, which is given to a sub-key, is permitted. In the present embodiment, the function indications based on the press-down of the menu button 92A, the route searching button 92C, and the image quality adjustment button 92D are made invalid (set so as not to function), and the function indications for others are made effective. Namely, the function indications based on the press-down of the present location button 92B, the cross-hair cursor key 92E, the map magnifying switch 92F, and the map reducing switch 92G are made effective.

Next, in step 130, it is determined whether or not a function-indicated operation was not made invalid in step 128. When it is a permitted function indication, the process proceeds to step 132, the indicated function is processed and the present routine ends. On the other hand, when it is not permitted, it is negated in step 130 and the present routine ends without processing the indicated function.

Accordingly, it is possible to permit or limit function indications previously set with respect to the main keys and the sub-keys.

Further, in the foregoing, the main key and the sub-key were described, but when at least one of the main key and the sub-key has a plurality, a value for determination may be set for each of all keys. As a result, it is possible to permit or limit function indications for each of (inherent codes of) the main keys and the sub-keys.

### INDUSTRIAL APPLICABILITY

As described above, a key control apparatus for a vehicle according to the present invention can be suitably used, for example, with a control apparatus which alters settings or limits functions for each of a plurality of vehicle key, and is particularly suitable for application to an apparatus which alters settings or limits functions for each of a plurality of ignition keys.

## Claims

1. A key control apparatus for a vehicle, comprising:
input means (32, 34) for inputting from key means an inherent code which is stored in advance in the key means, wherein said inherent code includes a classification of a key which indicates whether the key is a main key or whether the key is a sub-key for a vehicle;
storage means (20) which stores a plurality of said inherent codes correspondingly to said classification of key, said inherent codes of the main key and the sub-key being stored in advance in said storage means;
determination means (12) for determining said classification of the key which indicates whether the key is a main key or a whether the key is a sub-key, by collating the inherent code inputted into said input means, with the plurality of said inherent codes stored in said storage means;
**characterized by**:
a plurality of device control means (78-86) for respectively controlling a plurality of devices which are mounted on a vehicle and which can each function independently; and
limiting means (62) for limiting the control of at least one of said plurality of device control means based on the result of a determination of made by said determination means as to whether a key is a main key or whether a key is a sub-key;
wherein when a vehicle key is determined as the sub-key by said determination means (12), said limiting means (62) limits the control of at least one of said plurality of device control means.

2. A key control apparatus for a vehicle according to claim 1, **characterized** such that when a vehicle key is determined as the main-key by said determination means, said limiting means (62) does not limit the control of said plurality of device control means.

3. A key control apparatus for a vehicle according to claim 1, further comprising setting value storing means (62) which stores a setting value for at least one of said plurality of device control means for controlling a respective device according to the setting value when the setting value is read out from the setting value storing means, and wherein said plurality of device control means includes setting value control means which effects reading and writing of the setting value for said setting value storing means.

4. A key control apparatus for a vehicle according to claim 3, **characterized** such that said limiting means (62) prohibits alteration of a setting value with respect to said setting value storing means.

5. A key control apparatus for a vehicle according to any one of claims 1 to 4, wherein said device control means includes vehicle interior control means mounted within an accommodation space of the vehicle.

## Revendications

1. Dispositif de commande à clé destiné à un véhicule, comprenant :
un moyen d'entrée (32, 34) destiné à appliquer en entrée depuis un moyen de clé un code inhérent qui est mémorisé à l'avance dans le moyen de clé, dans lequel ledit code inhérent comprend un classement d'une clé qui indique si la clé est une clé principale ou si la clé est une sous-clé pour un véhicule,
un moyen de mémorisation (20) qui mémorise une pluralité desdits codes inhérents en correspondance avec ledit classement d'une clé, lesdits codes inhérents de la clé principale et de la sous-clé étant mémorisés à l'avance dans ledit moyen de mémorisation,
un moyen de détermination (12) destiné à déterminer ledit classement de la clé qui indique si la clé est une clé principale ou si la clé est une sous-clé, en collationnant le code inhérent appliqué en entrée dans ledit moyen d'entrée, avec la pluralité desdits codes inhérents mémorisés dans ledit moyen de mémorisation,
**caractérisé par** :
une pluralité de moyens de commande de dispositifs (78 à 86) destinés à commander respectivement une pluralité de dispositifs qui sont montés sur un véhicule et qui peuvent chacun fonctionner indépendamment, et
un moyen de limitation (62) destiné à limiter la commande d'au moins un moyen de ladite pluralité de moyens de commande de dispositifs sur la base du résultat d'une détermination faite par ledit moyen de détermination de ce qu'une clé est une clé principale ou de ce qu'une clé est une sous-clé,
dans lequel, lorsqu'une clé du véhicule est déterminée comme étant la sous-clé par ledit moyen de détermination (12), ledit moyen de limitation (62) limite la commande d'au moins un moyen de ladite pluralité de moyens de commande de dispositifs.

2. Dispositif de commande à clé destiné à un véhicule selon la revendication 1, **caractérisé en ce que**, lorsqu'une clé du véhicule est déterminée comme étant la clé principale par ledit moyen de détermination, ledit moyen de limitation (62) ne limite pas la commande de ladite pluralité de moyens de commande de dispositifs.

3. Dispositif de commande à clé destiné à un véhicule selon la revendication 1, comprenant en outre un moyen de mémorisation de valeurs de réglage (62) qui mémorise une valeur de réglage pour au moins un moyen de ladite pluralité de moyens de commande de dispositifs afin de commander un dispositif respectif conformément à la valeur de réglage lorsque la valeur de réglage est lue à partir du moyen de mémorisation de valeurs de réglage, et dans lequel ladite pluralité de moyens de commande de dispositifs comprend un moyen de commande de valeur de réglage qui réalise la lecture et l'écriture de la valeur de réglage pour ledit moyen de mémorisation de valeurs de réglage.

4. Dispositif de commande à clé destiné à un véhicule selon la revendication 3, **caractérisé en ce que** ledit moyen de limitation (62) interdit l'altération d'une valeur de réglage en ce qui concerne ledit moyen de mémorisation de valeurs de réglage.

5. Dispositif de commande à clé destiné à un véhicule selon l'une quelconque des revendications 1 à 4, dans lequel ledit moyen de commande de dispositif comprend un moyen de commande intérieur de véhicule monté à l'intérieur d'un espace d'habitacle du véhicule.

## Patentansprüche

1. Schlüsselsteuerungsvorrichtung für ein Fahrzeug, mit:
einer Eingabeeinrichtung (32, 34) zum Eingeben eines inhärenten Kodes von einer Schlüsseleinrichtung, welcher im Voraus in der Schlüsseleinrichtung gespeichert wird, wobei der inhärente Kode eine Klassifikation eines Schlüssels umfasst, welche angibt, ob der Schlüssel ein Hauptschlüssel oder ob der Schlüssel ein Unterschlüssel für ein Fahrzeug ist;
eine Speichereinrichtung (20), welche eine Vielzahl von inhärenten Kodes entsprechend der Schlüsselklassifikation speichert, wobei die inhärenten Kodes von dem Hauptschlüssel und dem Unterschlüssel im Voraus in der Speichereinrichtung gespeichert werden;
eine Bestimmungseinrichtung (12) zum Bestimmen der Klassifikation von dem Schlüssel, welche angibt, ob der Schlüssel ein Hauptschlüssel oder ob der Schlüssel ein Unterschlüssel ist, durch Zuordnen des inhärenten Kodes, der in die Eingabeeinrichtung eingegeben wird, zu der Vielzahl von den inhärenten Kodes, die in der Speichereinrichtung gespeichert sind;
**gekennzeichnet durch**:
eine Vielzahl von Gerätesteuerungseinrichtungen (78 bis 86) zum entsprechenden Steuern einer Vielzahl von Geräten, welche an einem Fahrzeug angebracht sind und welche alle unabhängig arbeiten können; und
eine Begrenzungseinrichtung (62) zum Begrenzen der Steuerung von zumindest einer von der Vielzahl von Gerätesteuerungseinrichtungen basierend auf dem Ergebnis von einer dahingehenden Bestimmung, die von der Bestimmungseinrichtung gemacht wird, ob ein Schlüssel ein Hauptschlüssel oder ob ein Schlüssel ein Unterschlüssel ist;
wobei die Begrenzungseinrichtung (62) die Steuerung von zumindest einer von der Vielzahl von Gerätesteuerungseinrichtungen begrenzt, wenn ein Fahrzeugschlüssel **durch** die Bestimmungseinrichtung (12) als der Unterschlüssel bestimmt wird.

2. Schlüsselsteuerungsvorrichtung für ein Fahrzeug gemäß Anspruch 1, **dadurch gekennzeichnet, dass** die Begrenzungseinrichtung (62) die Steuerung von der Vielzahl von Gerätesteuerungseinrichtungen nicht begrenzt, wenn ein Fahrzeugschlüssel durch die Bestimmungseinrichtung als der Hauptschlüssel bestimmt wird.

3. Schlüsselsteuerungsvorrichtung für ein Fahrzeug gemäß Anspruch 1, weiter mit einer Einstellwertspeichereinrichtung (62), welche einen Einstellwert für zumindest eine von der Vielzahl von Gerätesteuerungseinrichtungen speichert, um ein entsprechendes Gerät gemäß dem Einstellwert zu steuern, wenn der Einstellwert aus der Einstellwertspeichereinrichtung ausgelesen wird, und wobei die Vielzahl von Gerätesteuerungseinrichtungen eine Einstellwertsteuerungseinrichtung umfassen, welche ein Lesen und Schreiben von dem Einstellwert für die Einstellwertspeichereinrichtung bewirkt.

4. Schlüsselsteuerungsvorrichtung für ein Fahrzeug gemäß Anspruch 3, **dadurch gekennzeichnet, dass** die Begrenzungseinrichtung (62) eine Änderung von einem Einstellwert in Bezug auf die Einstellwertspeichereinrichtung verhindert.

5. Schlüsselsteuerungsvorrichtung für ein Fahrzeug gemäß einem der Ansprüche 1 bis 4, wobei die Gerätesteuerungseinrichtungen eine Fahrzeuginnenraumsteuerungseinrichtung umfassen, die innerhalb eines Unterbringungsraums von dem Fahrzeug angebracht ist.
